# EUROPEAN PATENT APPLICATION

(11) **EP 0 911 738 A2**
(43) Date of publication of application: **28.04.1999**
(21) Application number: 98308620.8
(22) Date of filing: 21.10.1998
(51) Int. Cl.: G06F 12/14

(54) **Disk drive with embedded data encryption**

(30) Priority: 22.10.1997 GB 9722201
(71) Applicant: CALLUNA TECHNOLOGY LIMITED, Edinburgh EH1 2ET (GB)
(72) Inventor: Jackson, Trevor David, Edinburgh, EH15 2RP (GB)
(74) Representative: Kerr, Sheila Agnes Fife

(57) **Abstract**

An improved disk drive (DD¹) is described in which an encryption/decryption circuit (4) is provided, connected to read/write means (9,13) of the drive, for encrypting data to be written onto, and decrypting data to be read from, the disk(s) (11). The drive control includes permanent security control features for restricting read/write access to the disk(s) (11) via the encryption/decryption circuit, for at least the data content of data files to be written thereto or read therefrom. Password-dependent security control is also provided which activates the encryption/decryption circuit only in response to receipt of a valid password input by a user, so that read/write access to the disk(s), in relation to at least the data content of data files, is restricted to holders of a valid password.

## Description

The present invention relates to data security in computer systems and, more specifically, to the field of data encryption for data security purposes. In particular, the present invention concerns a disk drive having a data encryption/decryption facility built into the drive itself.

The need for protecting data stored on computer systems is a wide-ranging issue. Computer hackers, destruction of data by viruses, loss of computer equipment and the theft of data are commonplace. The nature of data stored in computer files can be such that its loss or disclosure can be financially, politically or personally damaging. Consequently there have been many data protection systems proposed which address these issues, many of these involving some form of data encryption.

Data encryption involves changing data in a controlled manner to make it unreadable in its encrypted state. Only by reversing the encryption process can the original data be recovered. There are many methods of encrypting data. They are invariably based on mathematical algorithms which are easily implemented in computer systems. As a result there is a wide choice of software available to perform data encryption. The very action of rendering data unreadable is generally sufficient to make it secure. The fact that encrypted data may be accessible to anyone is of little concern so long as no one can decrypt it and read it.

Typically, software encryption methods do not operate automatically in real time. They rely on the user making a conscious decision to encrypt certain chosen files and are thus dependent on procedures and on the discipline of the user. Difficulties may arise as a result of a computer operating system performing a task of which the user is entirely unaware. For example, a software application, such as word processing, may, on its own, create a backup copy of a file or a temporary file that the user may access if required. Unfortunately, these extra file copies pose a risk from a security point of view since backup files and temporary files can be overlooked when an instruction is given to encrypt the primary file. Operating systems can also make copies of data as a safeguard against system failure. Files (called core dumps) consisting of the contents of the computer memory at the time of the system failure are written to the system disk drive. By examination of the core dump, information can be retrieved concerning the data being operated on at the time of the system failure.

Another problem with backup files, temporary files and core dumps is that they can remain stored on the system following a reboot after a system failure. System backups are frequently carried out and archive records can contain copies of the data either in its original form or in backup, temporary or dump form. This all contributes to the possibilities of uncontrolled copies of the data existing in an unencrypted state on the computer system.

Virtually all computer systems store data on hard disk drives with storage capabilities ranging from around 100 megabytes to several gigabytes. These drives are used to store a wide variety of information, including operating system software, application packages, user files, databases, backup files, temporary files and such like. As described above, whether or not this information is in encrypted form depends on the user's requirements and diligence.

It is an aim of the present invention to avoid or minimise one or more of the foregoing disadvantages. More specifically, but not exclusively, it is an aim of the present invention to remove the onus from the user to ensure that all files that should be protected by means of encryption are so protected.

Accordingly, the present invention provides an improved disk drive having: at least one hard disk; drive control means for controlling operation of the drive; and read/write means for reading data from, and writing data onto, said at least one hard disk; wherein the improvement comprises the provision of encryption/decryption means, connected to said read/write means, for encrypting data to be written onto, and decrypting data to be read from, said at least one hard disk; said drive control means including permanent security control means formed and arranged for restricting read/write access to said at least one hard disk via said encryption/decryption means, for at least the data content of data files to be written thereto or read therefrom, and password-dependent security control means formed and arranged for receiving user input password data, comparing said user input password data with predetermined password data stored in said password-dependent security control means, and for activation of said encryption/decryption means only in response to receipt of a valid password, whereby read/write access to said at least one hard disk, in relation to at least the data content of data files, is restricted to holders of a valid password.

An advantage of the present invention is that the encryption/decryption means is a part of the disk drive itself. It is not provided as a separate module or card for attaching to the drive or host system for the drive, such modules and cards often being capable of being by-passed or removed by a user, who might be an authorised or unauthorised user.

Preferably, the encryption/decryption means is provided in integrated circuitry in the disk drive.

Advantageously, the disk drive is a removable disk drive. The disk drive may also be a miniature disk drive. Thus, the disk drive may, for example, be a 1.8 inch removable disk drive which conforms to PCMCIA standards (Type III). The advantage of a removable drive is that the drive may be removed from the host system and taken to a secure storage place when not in use, the encryption/decryption means in the drive thus also being removed from the host system. Moreover, the drive could subsequently be installed in a different host system, the encryption/decryption means in the drive enabling data stored on said at least one hard disk thereof to be decrypted and read, and/or new data to be written thereon in encrypted form, while the drive is used in the new host system. The invention thus provides greater flexibility for a user while maintaining secure data storage.

The password-dependent security control means may conveniently be incorporated, at least partly, in a microprocessor (provided in the drive) which is linked to the encryption/decryption means, and may also be partly included in the encryption/decryption means itself, and may further include a dedicated password input device e.g. a security key interface device, such as, for example, a card reader for reading password data from a card inserted thereinto. The security key interface device is generally connected to the microprocessor and/or encryption/decryption means for controlling operation of the drive e.g. in relation to the read/write means thereof.

The microprocessor is preferably formed and arranged to be responsive to commands issued from the host system and is conveniently programmed to: extract a password from a password input means provided externally to the drive (e.g. the host keyboard or a dedicated password input device) and connected, directly or indirectly, thereto; load the password extracted therefrom into the encryption/decryption means; and to receive a password evaluation signal (indicating acceptability or otherwise of the user input password) issued by the encryption/decryption means in response to the password. Said predetermined password data is preferably stored in the encryption/decryption means which is preferably adapted to issue a first ("acceptance") predetermined password evaluation signal if said user input password data matches said predetermined password data stored therein, and preferably also to issue a second ("rejection") predetermined password evaluation signal if said input password data does not match said stored password data. The microprocessor is preferably programmed to activate the encryption/decryption means if the password evaluation signal received from the latter means matches a predetermined password evaluation signal programmed into a memory of the microprocessor means, and to maintain the encryption/decryption means in a deactivated state if the password evaluation signal received from the encryption/decryption means does not match said pre-programmed password evaluation signal. Naturally the encryption/decryption means could be integrated with the microprocessor, if desired.

The permanent security control means of the drive may be implemented in hardware and/or firmware and/or software and may, conveniently, be at least partially provided as code pre-programmed into the microprocessor of the disk drive. Advantageously, the permanent security control means is adapted to restrict read/write access to the disk or disks by causing all data to be written to, and all data to be read from, the disk(s) to be routed through the encryption/decryption means. Alternatively the permanent security control means may only cause some data to be routed through the encryption/decryption means, for example only the data content of data files and not the address content of said data files. In its activated state, the encryption/decryption means advantageously encrypts all data routed therethrough from the permanent security control means. The encrypted data from the encryption/decryption means is then written onto the disk(s) via the read/write means. The activated encryption/decryption means also decrypts all encrypted data read from said disk(s) by the read write means. The decrypted data is returned to the host system (in which the drive is installed). For the avoidance of doubt, in its deactivated state the encryption/decryption means does not carry out any encryption or decryption.

Preferably, the encryption/decryption means is formed and arranged such that, in its deactivated state, no data can pass therethrough. Consequently, where the permanent security control means is adapted to route all data to be written to, or read from, the disk(s) through the encryption/decryption means, if the encryption/decryption means is in its deactivated state no data can be written to or read from the disk(s), whether in encrypted form or otherwise.

Whether the permanent security control means causes all, or only some, of the data written onto and read from the drive to be routed through the encryption/decryption means is preferably controlled by the drive manufacturer who programs the permanent security control means accordingly (e.g. with appropriate software or firmware code) during manufacture of the drive.

According to another aspect of the invention we provide a data access security control system for a computer, the system comprising a disk drive of the present invention which is provided with a security key interface device, and a discrete security key component for interengaging, in use, with the security key interface device.

The discrete security key device may conveniently comprise a portable key card which contains user input password data for inputting to the password-dependent security control means of the drive, via the security key interface device provided as part of the data access security control system. The security key interface device may be provided in the disk drive itself or may, alternatively, be provided in a host computer in which the drive is installed. Thus, said security key interface may comprise a part of, or may alternatively be formed and arranged for electrical connection to, the password-dependent security control means of the drive. The portable key card may include a TROM (Touch Read Only Memory) for contacting an input/output port of the security key interface device, said TROM containing said user input password data.

The user input password data may comprise one or more security passwords. The user input password data may comprise encryption algorithm data for use by the encryption/decryption means in the encryption and decryption of data passing therethrough.

According to a yet further aspect of the invention, we provide an improved drive for removable mass storage devices such as floppy disks, compact discs (CDs) or magnetic tapes, the drive having: mass storage device engaging means for engaging at least one removable mass storage device; drive control means for controlling operation of the drive; and read/write means for reading data from, and writing data onto, said at least one mass storage device engaged in said engaging means in use of the drive; wherein the improvement comprises the provision of encryption/decryption means, connected to said read write means, for encrypting data to be written onto, and decrypting data to be read from, said at least one mass storage device; said drive control means including permanent security control means formed and arranged for restricting read/write access to said at least one mass storage device via said encryption/decryption means, for at least the data content of data files to be written thereto or read therefrom, and password-dependent security control means formed and arranged for receiving user input password data, comparing said user input password data with predetermined password data stored in said password-dependent security control means, and for activation of said encryption/decryption means only in response to receipt of a valid password, whereby read/write access to said at least one mass storage device, in relation to at least the data content of data files, is restricted to holders of a valid password.

Preferred embodiments of the invention will now be illustrated by way of example only and with reference to the accompanying drawings in which:
Fig.1 is a block diagram illustrating a conventional disk drive;
Fig.2 is block diagram illustrating a disk drive according to the present invention;
Fig.3 illustrates timing waveforms used in operation of the drive of Fig.2; and
Fig.4 is a flow diagram illustrating the operation of the drive of Fig.2.

In a typical conventional computer a host system writes data to a disk drive in the form of a file. This file is typically transferred in 512 byte packets until the whole file is successfully written to the disk drive. The actual disks within the disk drive are formatted using areas of control information which are necessary for the drive control circuitry to locate specific locations called sectors where the 512 byte packets are stored. There may also be areas of defective storage space which are identified as bad sectors and avoided by the drive control circuitry. The format operation implements the geometry of the drive, that is, the number of cylinders (tracks at a particular radius common to all disk surfaces), heads and sectors and is used to achieve the specified storage capacity, normally expressed in megabytes (millions of bytes).

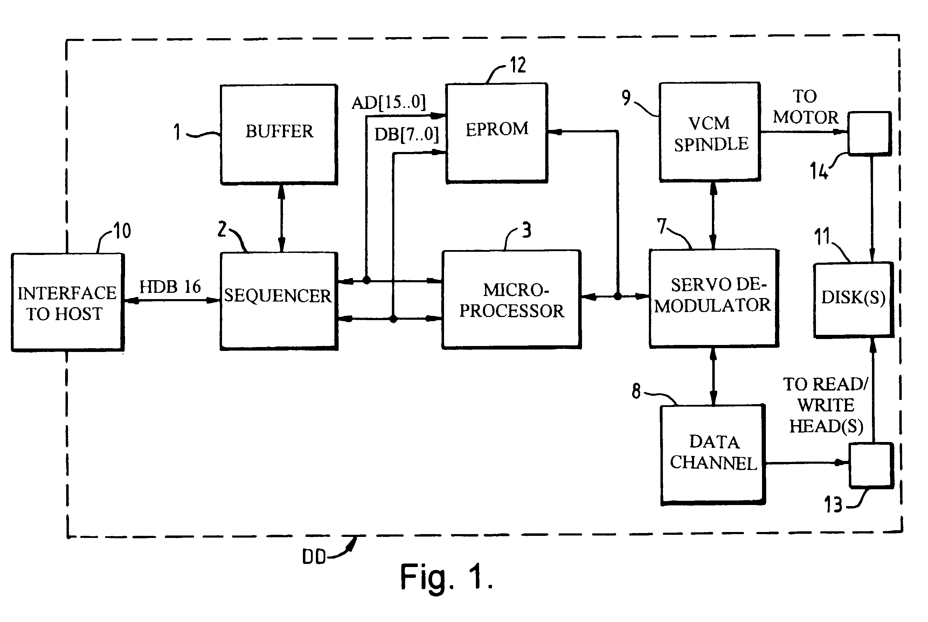

Fig.1 illustrates schematically in block diagram form a conventional disk drive system DD. The various components of the drive will now be described with reference to the operation of the drive. The drive DD incorporates a microprocessor 3 which includes hardware and firmware for performing DSP (digital signal processing) as well as drive control functions such as read/write control, self-test control, ADC (analog to digital converter) and DAC (digital to analog converter), servo control and host interface control. A servo de-modulator 7 is connected to and controlled by the microprocessor 3. The servo de-modulator 7 is a custom mixed signal ASIC (application specific integrated circuit) and communicates with and controls data channel circuitry 8 via which read/write data is transferred from/to one or more read/write heads 13 which read/write data from/to one or more respective disks 11 of the drive. The servo de-modulator 7 is also linked to and controls the VCM (voice coil motor) of the drive and the spindle (both indicated by block 9 in Fig.1) in which one or more disks 11 of the drive are mounted. The spindle is driven by a motor 14 provided in the drive.

The act of recording (storing or writing) information on the disk drive involves a number of steps which are primarily aimed at two areas of operation, the first being the control of orderly writing of the data to the various sectors on the disks and the second being the conversion of the binary string of file data into an alternative sequence of binary digits suitable for the magnetic recording operation itself. This latter operation uses a circuit called an encoder for writing and a decoder for read-back and generally converts customer data (normally in the binary form of Non Return to Zero or NRZ) into a so-called Run Length Limited code such as MFM (modified frequency modulation), 1,7 RLL or 2,7 RLL. The encoder/decoder circuitry is included in the microprocessor 3. The timing and orderly control of the incoming data is often managed by a device known as a sequencer 2 which clocks the data in and out of a temporary location on the drive known as a buffer 1. The buffer is loaded with data from the host (via a host interface 10) when there is space available in the buffer and the host has data to write to the drive. The sequencer removes data from the buffer and presents it to the encoder in the microprocessor 3 for encoding after which it may be written to the disks. Space is then made available in the buffer and the process is repeated until all the data from the host has been written to the drive. The same principle can be used in reverse to read data from the drive. The sequencer retrieves the decoded data from the disks and loads it sequentially into the buffer. The data can then be transferred to the host, again in packets of 512 bytes. This process may be repeated until the whole file has been read from the drive.

Software code which is used by the DSP in the microprocessor 3 is stored in an EPROM 12 (erasable programmable memory) in the drive, which EPROM 12 may also receive data, and address data, from the microprocessor 3 and the sequencer (via an eight bit data bus DB[7..0] and an address bus AD[15..0]), and send control information to the microprocessor and servo de-modulator, during use of the drive, as indicated in Fig.1.

The current invention is a disk drive which operates substantially as described above but where the data presented by the host is encrypted into alternative form on the drive itself prior to being processed through the encoder and written to the disk. In a reciprocal way, the (encrypted) data stored on the disk is read back in the normal way through the decoder and is decrypted prior to being transferred to the host.

The encryption is performed in hardware and does not rely on user intervention. Any data read from the drive is automatically decrypted. To fully protect the data, the drive must be placed in an enabled state where the encryption/decryption function will operate. On power up, the drive is in the disabled state and is placed in the enabled state by inputting a numerical key that acts like a password. The numerical key is authenticated by the encryption hardware on the drive. If the numerical key is valid read/write access to the drive is granted, but if the numerical key is invalid then such access is denied.

An important feature of the invention as described below is that all data written to the drive is automatically encrypted. As a result, operating system software and software applications will be encrypted at the time they are installed onto the drive. User data, back up files, temporary files and any core dumps will also be encrypted. The responsibility to encrypt data has been assumed by the drive rather than the user. Since the encryption process is fully implemented in the hardware of the drive, there is no requirement for additional software or hardware to be added to the computer system.

All the electronics required to perform the encryption and decryption functions are built into the disk drive. This produces a self contained solution. Any system that interfaces to a hard disk drive can in principle be used with this invention and there is no requirement for modifications to the host system, nor additional operating system software or applications software.

### The Data Encryption Device (DED)

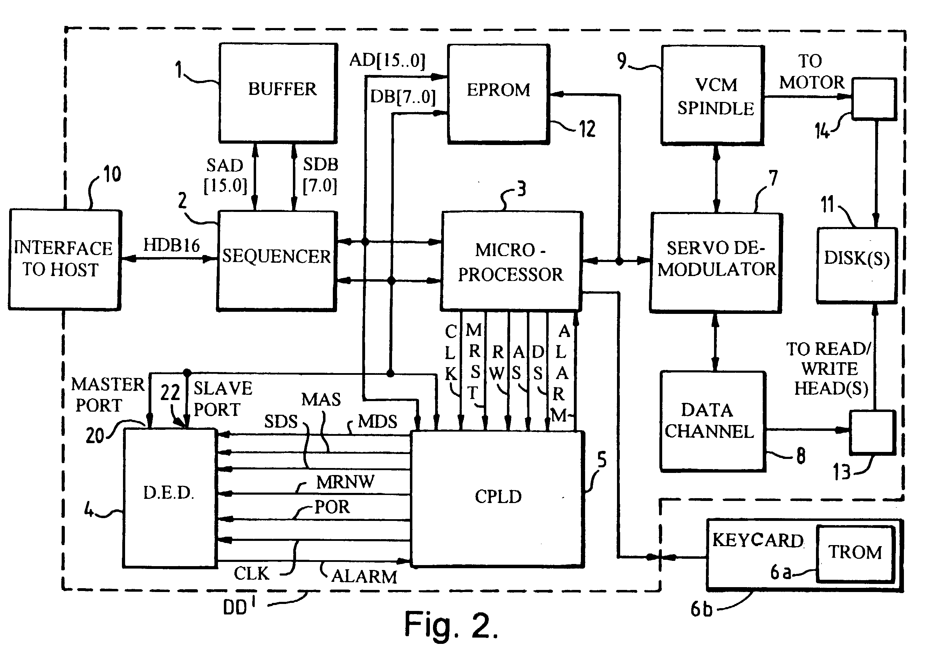

Fig. 2 is block diagram of a disk drive DD¹ according to the present invention. Like components to those described with reference to the drive of Fig.1 are indicated by like reference numerals. The drive incorporates an integrated circuit 4 referred to as a Data Encryption Device or DED. The DED is capable of encrypting data input thereto and decrypting encrypted data input thereto. The DED must be enabled to allow a user access to the date. In its disabled state, no access is allowed by the host to the stored data. To enable the DED, a string of up to sixteen ASCII characters must be input to the DED. This string is referred to as a Crypto Variable or CV and consists of a data key and a checksum. The data key is a string of up to 13 hexadecimal values, each in the range 00h to FFh. The checksum is three bytes in length and is a linear function of the contents of the data key. A higher level of security may be achieved if, after the CV is loaded, a further eight ASCII characters are input. These eight ASCII characters are referred to as an Initialisation Vector or IV.

The DED can operate in several modes:
ECB - Electronic Code Book
CBC - Chain Block Ciphering
Pipeline
ECB requires only the CV to be loaded to enable the disk drive. Once the CV is loaded into the DED, initial circuitry in the DED verifies that the CV is valid. This is done by means of a comparison (between the loaded CV and a predetermined CV stored in the DED) carried out in the DED. The CV acts partly as a password and as the starting point of the encryption algorithm. Following the validation of the first CV, a second CV, previously encrypted by the first CV during manufacture of the drive and stored in an encrypted state in the EPROM 12 of the drive, is then automatically loaded into the DED. It is decrypted and used as part of the algorithm to encrypt and decrypt data from and to the host.
CBC (and pipeline mode) require both a CV and an IV to be loaded in order to enable the drive. The IV would be a string of characters unique to the particular drive, perhaps including the serial number. The process is similar to that just described but an additional level of security is provided. In this case, the encryption algorithm for each sector of data will be based on the internal CV and an internal IV unique to the drive and that sector. This internal IV would be typically based on the input IV (itself depending on the drive serial number, for example) and on the logical block address of the sector in question. An advantage of this approach arises when identical data is written to each sector since the resulting encrypted data will differ sector by sector, making it more difficult to decode the encrypted data.

The CV is provided in a user password input key card 6b separate from the disk drive. Separately, the drive and the CV key card are useless and can be treated as low risk items. The stored data is secure. (Together they may be recognised as a higher risk and the stored data may be accessible).

The implementation of the invention illustrated in Fig.2 is based on a 1.8 inch removable hard disk drive which can operate in both PCMCIA and ATA - IDE interface mode. A sequencer 2 is used to control the transfer of data between the one or more hard disks 11 of the drive, and the host system interface 10 (to host system), via a buffer 1 in the form of an SRAM. A microprocessor 3 controls all responses to the commands of the host system.

Data is transferred between the host 9 and the disk drive via the buffer or SRAM 1 (Sony CXK581000ATM, l28Kbyte x 8bit) under the control of the sequencer 2 (Zilog Z86018). The sequencer 2 also transfers the data from the SRAM to disks 11. The microprocessor 3 (Zilog Z8C95) executes a control program (stored as code in the microprocessor 3) to respond to host commands. The DED 4 (MA269) is used to encrypt and decrypt the data. The control logic required to interface the microprocessor 3 to the DED 4 is achieved via a complex programmable logic device 5 or CPLD (Cypress CY7C374i). In the present embodiment, a serial data line links a microprocessor input/output port to a contact for a touch ROM or TROM 6a (Dallas Touch ROM DS1994) which stores the CV and allows it to be loaded. The TROM is held in a user key card 6b. The TROM 6a is a small hermetically sealed can containing control logic and an area of E2PROM and is passively powered from the single data line and return, i.e. from the disk drive. The supply current is so low that the output drive current from the microprocessor 3 is sufficient to power the device.

### The DED Interface

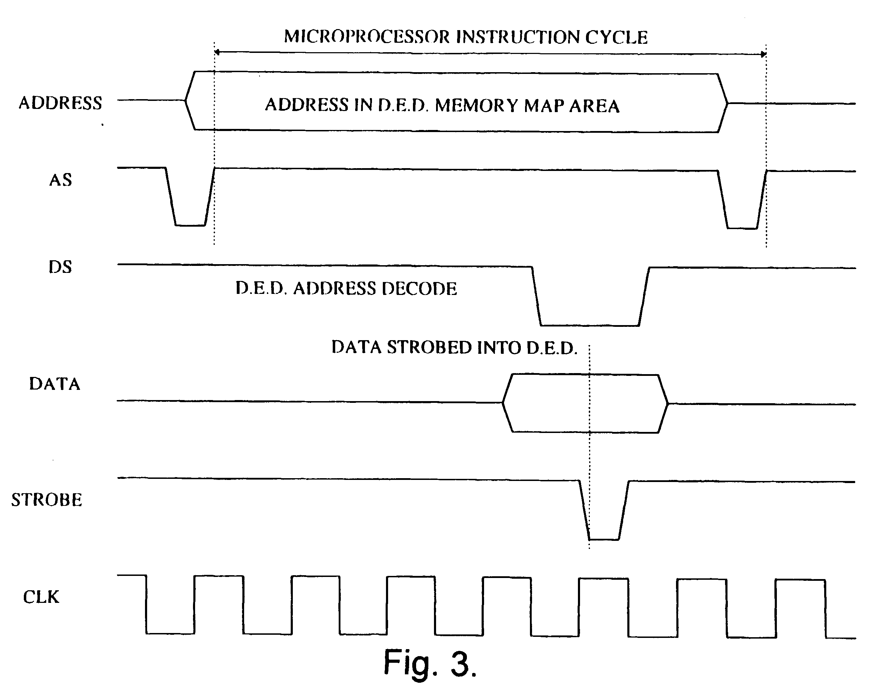

The particular implementation described here is CBC. The CV and IV are both loaded from the TROM 6a and the CV is authenticated to place the drive into the enabled state. The DED 4 is controlled by commands sent from the microprocessor 3 across an eight bit data bus DB[7..0], and a control signal generated by the CPLD 5 is issued to validate each command. This control signal is referred to as the master address strobe [MAS] and is triggered by decoding the address to which the microprocessor 3 sends the command. The command is validated on the falling edge of this control signal. This is illustrated schematically in Fig. 3. There are three control signals used in interfacing to the DED, namely the MAS and two other signals called MDS and SDS described below. The three signals are a product of the address that commands or data they control are written to, and a function of time triggered from the address strobe of the microprocessor 3. The applicable commands are:
- Load CV: - this is the authorisation procedure
- Load IV: - this is used in CBC and pipeline mode to further encrypt the data to achieve a higher security level
- Start: - will start the encrypt/decrypt process.
- Stop: - will stop the encrypt/decrypt process.

The DED has a master port 20 and a slave port 22 both of which interface to the eight bit data bus DB[7..0]. There is a master port control signal called the Master Data Strobe [MDS] and a slave port control signal called the Slave Data Strobe [SDS]. These two signals validate the data on the data bus, the data being valid on the falling edge of the control signal. Unencrypted data is always accessed via the master port 20 gated with the MDS while encrypted data is accessed via the slave port gated with the SDS. The DED has two internal buffers called the input buffer and the output buffer. Each buffer is an eight byte cyclic storage unit. Data is loaded into the input buffer via either the master port or the slave port. When the input buffer is full the encryption algorithm operates and encrypts or decrypts the data depending on which port was used to load the input buffer. The output buffer contains the processed data. The input buffer, output buffer, mode control and command control of the DED can be thought of as registers which are assigned addresses in the microprocessor memory map. The microprocessor address bus can be used to access the registers and the data bus can be used to write data to and read data from these registers. The CPLD 5 is used to provide data bus buffering when accessing either the master port 20 or the slave port 22. When the microprocessor 3 addresses the DED 4, address decode logic in the CPLD generates a chip enable signal. Further address decoding in conjunction with the Address Strobe and the Data Strobe from the microprocessor generates one of MAS, MDS SDS depending on the operation. These three signals are referred to as the 'strobes', (see Figure 3).

A START command must be sent in order to write to the input buffer in the DED. A byte of data must be written to a port in the DED and a control signal must be issued. The data is clocked-in on the falling edge of this control signal. This cycle is repeated until all the data has been written to the port. Each time the input buffer is full the encryption/decryption function is automatically executed, the input buffer is available for re-loading and the output buffer is loaded with the processed data.

On a host write operation, the SRAM 1 is loaded with the data. The data is transferred from the SRAM in eight byte packets to the DED where it is encrypted. The Cipher Text (encrypted data) is written back to the same location in the SRAM. This process continues until the data in the SRAM has been encrypted. The sequencer 2 is then started and the Cipher Text is written to the disks 11. This process is repeated until there is no more host data to write to the drive.

### Method for CV Entry

In the present embodiment, the CV is loaded into the TROM 6a. Protruding through one end of the disk drive is a spring-loaded pin which is insulated from the base and connected directly to an input/output pin on the microprocessor 3. The location of this pin is such that it is accessible when the drive is inserted into a host. With the drive correctly inserted into a host, a TROM 6a can be brought in contact with the pin and the drive base and a data path established. The microprocessor 3 constantly monitors this pin for the presence of a TROM. When a TROM is detected, a command is sent to the control logic of the TROM to open a data path. A protocol is entered by the microprocessor to extract the CV data from the TROM. The CV data is read into the microprocessor and then loaded into the DED 4. If the CV is deemed to be valid, it is used to decrypt a hidden data string stored on the disk drive. The decrypted form of this string is a second CV, which is loaded into the DED along with an IV unique to each disk drive. Assuming the CV is authenticated, the DED will be placed in the enabled state. A control (or "evaluation" signal), hereinafter referred to as the "Alarm Signal", will be sent back to the microprocessor 3 to verify that this operation is complete. This control signal is connected to a Light Emitting Diode [LED] to inform the user of the state of the drive. The microprocessor 3 will then stop monitoring the input/output line for any further TROM devices.

### Operation of the Disk Drive

The disk drive storing encrypted data is inserted into the host system. The interface to the host is established (via the host interface 10 of the drive) and the drive starts to monitor for the presence of a TROM. Only host commands that do not attempt to start the drive motor (for rotating the disks 11) of the drive are accepted until the CV has been loaded and authenticated. This is because any attempt by the host to access data on the drive will result in the host operating system being unable to recognise the drive, due to the fact that the File Allocation Table and Directory structure are also stored in an encrypted state, and in the disabled state these are unreadable. The user must bring the TROM 6a into contact with the drive until the enable state is entered, which may take up to 300 milliseconds.

On a host read operation to read a file, the sequencer 2 will retrieve the encrypted file data from the disks 11 (via the VCM, spindle 9, motor 14 and read/write heads 13) and load it into the SRAM 1. From the SRAM the data is transferred in eight byte packets to the DED where it is decrypted. The plain text is then transferred back to the SRAM and is transferred to the host when the SRAM is full. Space is then made available in the SRAM. This process continues until the whole file has been read.

On a host write operation, the plain text is transferred from the host to the SRAM 1 via the host interface 10 and sequencer 2. The data in the SRAM is transferred in eight byte packets to the DED 4 where it is encrypted. Once all the data in the SRAM has been encrypted, the sequencer 2 will transfer the cipher text from the SRAM to the disks 11. Space is made available in the SRAM. If more host data is available, it is transferred to the SRAM and the process is repeated.

When power is removed from the drive, the CV is lost from the DED and, as a result, the drive is put into the disabled state. On reconnection of power, the CV loading and authentication process must be repeated in order to enable the drive.

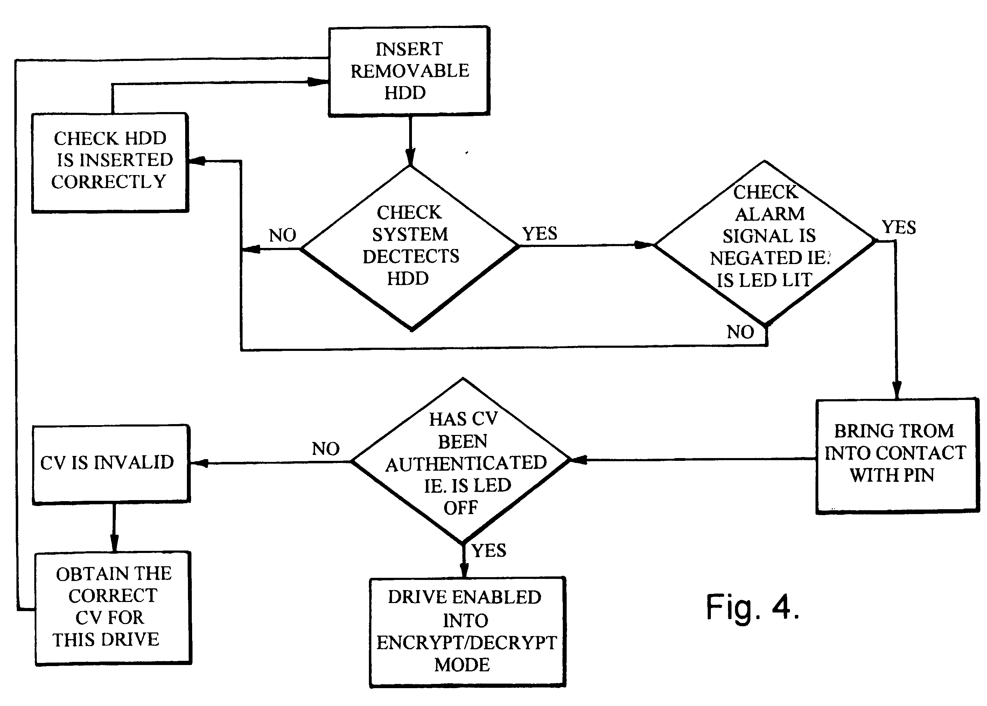

Fig.4 is a flow diagram illustrating the operation of the drive authentication process. The hard disk drive (HDD) is first inserted into the host system, which system, if it detects the presence of the HDD, lights the LED (which is visible to the user). If the LED is not lit, the user must check that the HDD is inserted correctly, and that the LED is therefore lit, before proceeding any further. Once the LED is lit, the user brings the TROM keycard into contact with the spring-loaded pin (connected to the microprocessor). Once the CV has been authenticated, the DED is put into its enabled state (for encryption/decryption) and the LED is switched off (i.e. unlit). If the CV is not authenticated, the LED remains on and the user must go back to the first step and insert a valid HDD.

In principle, there are many valid CVs that can be used to enable a drive (of the order of ten to the power fifteen). However, only the CV that was used to encrypt data can be used to decrypt it and, in practice, this would be the CV used in manufacture of the particular drive.

If two similar encrypting disk drives, each operating in CBC, are enabled using the same CV, the result will be two unique, secure products since the IV is unique to each drive. Even if identical data was written to each drive, the encrypted data would be different.

Any attempts to recover data by, for example, removing disks from the encrypting drive and examining them in a non-encrypting drive or by an alternative examination of magnetic patterns on the disk surfaces would only result in the encrypted data being read. Due to the complexity of the encryption algorithms employed, and the use of the CBC mode of operation of the DED, the encrypted data may be considered as safe. The time and effort required to decode the encrypted data is prohibitive.

The 1.8 inch disk drive can be used either as a secondary storage device, storing only user files, or as the primary storage device, holding operating system software and other applications, as well as user files. It can be the boot drive of a system. Embedding the data encryption facility into this type of drive creates a system with a very high level of data security. Not only is all data automatically stored on the drive in encrypted form but the drive is designed to be removed and hence may be taken to a safe physical location for additional security.

It will be appreciated that the present invention is applicable not only to (removable) hard disk drives
conforming to PCMCIA standards, but is applicable to all types of hard drives, including permanent (non-removable) drives, using a variety of intelligent interfaces including SCSI (small computer systems interface).

It will further be appreciated that the present invention is also applicable to drives for removable mass storage devices, for example, floppy disk drives, CD-ROM drives, magnetic tape drives. For such drives, the modifications to the relevant conventional drive circuitry necessary to achieve the invention would be substantially similar to the modifications incorporated in the drive of Fig.2 as described in relation to the conventional hard drive circuitry of Fig.1. However, it will be appreciated that in the case of a removable mass storage device, e.g. a floppy disk onto which data has been written in encrypted form and which has subsequently been removed from the floppy drive, that device can only be subsequently read by inserting it back into the same (floppy) drive, or alternatively an identical drive (having an identical DED and the same CV and IV).

## Claims

1. An improved disk drive (DD¹)having: at least one hard disk (11); drive control means (3,5,7,8) for controlling operation of the drive; and read/write means (9,13,14) for reading data from, and writing data onto, said at least one hard disk; wherein the improvement comprises the provision of encryption/decryption means (4), connected to said read/write means, for encrypting data to be written onto, and decrypting data to be read from, said at least one hard disk; said drive control means including permanent security control means (3,5) formed and arranged for restricting read/write access to said at least one hard disk via said encryption/decryption means, for at least the data content of data files to be written thereto or read therefrom, and password-dependent security control means (3,4) formed and arranged for receiving user input password data (CV), comparing said user input password data with predetermined password data stored in said password-dependent security control means, and for activation of said encryption/decryption means only in response to receipt of a valid password, whereby read/write access to said at least one hard disk, in relation to at least the data content of data files, is restricted to holders of a valid password.

2. A disk drive according to claim 1, wherein said encryption/decryption means is provided in integrated circuitry in the disk drive.

3. A disk drive according to claim 1 or claim 2, wherein the disk drive is a removable disk drive.

4. A disk drive according to any preceding claim, wherein the drive includes a microprocessor (3) which is linked to the encryption/decryption means (4), and said password-dependent security control means is incorporated, at least partly, in said microprocessor.

5. A disk drive according to claim 4, wherein said password-dependent security control means is incorporated partly in said encryption/decryption means (4).

6. A disk drive according to claim 4 or claim 5, wherein said password-dependent security control means further includes security key interface means for interfacing, in use of the drive, with discrete security key means (6a,6b) provided externally to the drive and which contains user input password data (CV).

7. A disk drive according to claim 4, wherein said microprocessor (3) is formed and arranged to be responsive to commands issued from a host system (9) in which the disk drive is used, and is programmed to: extract a password (CV) from a password input means (6a,6b) provided externally to the drive and connected, directly or indirectly, thereto; load the password extracted therefrom into the encryption/decryption means (4) ; and to receive a password evaluation signal issued by the encryption/decryption means in response to the password.

8. A disk drive according to claim 7, wherein the predetermined password data is stored in the encryption/decryption (4) means which is adapted to issue a first ("acceptance") predetermined password evaluation signal if said input password data (CV) matches said predetermined password data stored therein.

9. A disk drive according to claim 8, wherein the encryption/decryption means (4) is adapted to issue a second ("rejection") predetermined password evaluation signal if said input password data (CV) does not match said stored password data.

10. A disk drive according to claim 8 or claim 9, wherein said microprocessor (3) is programmed to activate the encryption/decryption means (4) if the password evaluation signal received from the encryption/decryption means matches a predetermined password evaluation signal programmed into a memory (12) of the microprocessor means, and to maintain the encryption/decryption means in a deactivated state if the password evaluation signal received from the encryption/decryption means does not match said pre-programmed password evaluation signal, and wherein the encryption/decryption means is formed and arranged such that in its activated state all data routed therethrough by the permanent security control means is encrypted/decrypted and in its deactivated state no data can pass through the encryption/decryption means.

11. A disk drive according to any of claims 4 to 10, wherein said permanent security control means of the drive is implemented at least partially as code pre-programmed into the microprocessor (3) of the disk drive.

12. A data access security control system for a computer, the system comprising a disk drive (DD¹) according to claim 1 which is provided with a security key interface device, and a discrete security key component for interengaging, in use, with the security key interface device, wherein said discrete security key component comprises a portable key card (6b) which contains user input password data (CV) for inputting to the password-dependent security control means of the drive, via the security key interface device provided as part of the data access security control system.

13. A control system according to claim 12, wherein said portable key card (6b) includes a TROM (Touch Read Only Memory) (6a) for contacting an input/output port of the security key interface device, said TROM containing said user input password data (CV).

14. An improved drive for removable mass storage devices, the drive having: mass storage device engaging means for engaging at least one removable mass storage device; drive control means for controlling operation of the drive; and read/write means for reading data from, and writing data onto, said at least one mass storage device engaged in said engaging means in use of the drive; wherein the improvement comprises the provision of encryption/decryption means, connected to said read write means, for encrypting data to be written onto, and decrypting data to be read from, said at least one mass storage device; said drive control means including permanent security control means formed and arranged for restricting read/write access to said at least one mass storage device via said encryption/decryption means, for at least the data content of data files to be written thereto or read therefrom, and password-dependent security control means formed and arranged for receiving user input password data, comparing said user input password data with predetermined password data stored in said password-dependent security control means, and for activation of said encryption/decryption means only in response to receipt of a valid password, whereby read/write access to said at least one mass storage device, in relation to at least the data content of data files, is restricted to holders of a valid password.
